Europäisches Patentamt

European Patent Office

Office européen des brevets

(19)

(11) **EP 0 687 276 B1**

(12) **EUROPÄISCHE PATENTSCHRIFT**

(45) Veröffentlichungstag und Bekanntmachung des Hinweises auf die Patenterteilung:
**25.11.1998   Patentblatt 1998/48**

(21) Anmeldenummer: **94909044.3**

(22) Anmeldetag: **25.02.1994**

(51) Int Cl.⁶: **C08F 210/10**, C08F 4/06,
C08F 4/14

(86) Internationale Anmeldenummer:
**PCT/EP94/00532**

(87) Internationale Veröffentlichungsnummer:
**WO 94/20554 (15.09.1994 Gazette 1994/21)**

(54) **CHLORFREIE, NICHT-TROCKNENDE ISOBUTEN-DIEN-COPOLYMERE**

NON-DRYING CHLORINE-FREE ISOBUTENE/DIENE COPOLYMERS

COPOLYMERES D'ISOBUTENE CONTENANT DES DIENES, NON DESSECHANTS ET EXEMPTS DE CHLORE

(84) Benannte Vertragsstaaten:
**AT BE DE ES FR GB IT NL SE**

(30) Priorität: **02.03.1993   DE 4306384**

(43) Veröffentlichungstag der Anmeldung:
**20.12.1995   Patentblatt 1995/51**

(73) Patentinhaber: **BASF Aktiengesellschaft
67063 Ludwigshafen (DE)**

(72) Erfinder:
• **RATH, Hans, Peter
  D-67269 Gruenstadt (DE)**
• **KNOLL, Konrad
  D-68161 Mannheim (DE)**

• **MACH, Helmut
  D-69115 Heidelberg (DE)**

(56) Entgegenhaltungen:
**EP-A- 0 016 312          EP-A- 0 481 297
FR-A- 2 256 933          US-A- 2 344 213
US-A- 4 899 013          US-A- 5 068 490**

• **CHEMICAL ABSTRACTS, vol. 87, no. 10, 5. September 1977, Columbus, Ohio, US; abstract no. 68887w, PROKOFEV 'ISOBUTYLENE-ISOPRENE COPOLYMERS' Seite 17 ;Spalte 2 ; & SU,A,560 890 (OTKRYTIYA, IZOBRET., PROM. OBRATSY, TOVARNYE ZNAKI) 5. Juni 1977**

EP 0 687 276 B1

**Beschreibung**

Die vorliegende Erfindung betrifft chlorfreie, nicht-trocknende Copolymere des Isobutens mit $C_4$- bis $C_{10}$-Dienen mit isolierten oder konjugierten Doppelbindungen, mit einem Gehalt von mindestens 60 mol-% an endständigen Doppelbindungen und einem Molekulargewicht $M_n$ von 500 bis 5000 Dalton sowie ein Verfahren zu deren Herstellung.

Copolymerisate aus Dienen und Isobuten dienen zur Herstellung von Kraft- und Schmieröladditiven, wie sie beispielsweise in GB-A 2 231 873 beschrieben sind. Voraussetzung für eine wirtschaftliche Verwendbarkeit von Dien-Isobuten-Copolymeren für den genannten Zweck ist ein Molekulargewicht dieser Copolymere im Bereich von 500 bis 5000 Dalton sowie insbesondere ein hoher Gehalt an endständigen Doppelbindungen von mehr als 50, vorzugsweise von mehr als 60 mol-%. Die endständigen Doppelbindungen sind erforderlich, um das Copolymer durch Umsetzung mit z.B. Maleinsäureanhydrid in das Maleinsäure-Copolymer-Addukt umwandeln zu können, welches dann mit Aminen zu den Kraftstoff- und Schmieröladditiven gemäß GB-A 2 231 873 umgesetzt wird.

Obwohl Copolymere aus z.B. 1,3-Butadien oder Isopren mit Isobuten in GB-A 2 231 873 als Ausgangsmaterialien zur Herstellung der betreffenden Additive genannt werden, haben Dien-Isobuten-Copolymere für diesen Zweck bislang keine Bedeutung erlangt, da es bislang nicht möglich war, Dien-Isobuten-Copolymere mit den genannten Anforderungen an das Molekulargewicht und den Gehalt an endständigen Doppelbindungen, im folgenden auch kurz als Endständigkeit bezeichnet, herzustellen.

Eine Übersicht über die Herstellung von Isobuten-Dien-Mischpolymerisaten wird in H. Güterbock, Polyisobutylen und Isobutylen-Mischpolymerisate, S. 122 bis 127, Springer Berlin 1958, gegeben.

US-A 2 818 460 beschreibt die Herstellung trocknender Öle durch die Copolymerisation von Isobuten mit 1,3-Butadien, wobei als Katalysator wasserfreier Fluorwasserstoff in einem N,N-Dialkylamid-Lösungsmittel verwendet wird. US-A 2 780 664 betrifft ebenfalls die Herstellung trocknender Öle durch Copolymerisation von 1,3-Butadien mit Isobuten, wobei als Katalysatoren Bortrifluorid-Etherate in einem Alkylhalogenid-Lösungsmittel verwendet werden.

Wird ein 1:1 Bortrifluorid-Methanol-Komplex als Katalysator benutzt, bilden sich gelartige oder harzige Copolymere.

Technische Bedeutung erlangt haben bislang nur hochpolymere Isobuten-Butadien- bzw. Isopren-Copolymere, allgemein als Butylkautschuk bezeichnet, die mit Hilfe von Aluminiumchlorid als Katalysator hergestellt werden. In Gegenwart des Aluminiumchloridkatalysators sowie in Gegenwart halogenierter, insbesondere chlorhaltiger Lösungsmittel kann es dabei allerdings zur Bildung halogenierter Copolymere kommen. Die Bildung hochmolekularer als auch die Bildung halogenierter Isobuten-Dien-Copolymerisate ist aber bei deren Verwendung zur Herstellung von Kraftstoffadditiven unerwünscht, zum einen wegen der geringen Löslichkeit der hochmolekularen Copolymere zum anderen, weil bei der Verbrennung halogenhaltiger Kraftstoffadditive halogenierte Dioxinderivate mit dem Abgas freigesetzt werden können, deren Bildung und Freisetzung aus ökologischen und toxikologischen Gründen zu vermeiden ist.

In US-A 2 578 214 werden nicht-trocknende Öle durch Copolymerisation von Isobuten mit 1,3-Butadien erzeugt, wobei Aluminiumchlorid als Katalysator benutzt wird. Bortrifluorid wird ebenfalls als Katalysator vorgeschlagen. Bei diesem Verfahren wird aber infolge der darin verwendeten, sehr reaktiven Katalysatoren, der größte Teil der endständigen Doppelbindungen zu innenständigen Doppelbindungen isomerisiert, so daß das nach diesem Verfahren erhaltene Copolymerisat ebenfalls nicht als Ausgangsmaterial zur Herstellung der genannten Kraftstoffadditive geeignet ist.

DE-A 27 02 604 betrifft niedermolekulare, reaktive Polyisobutene mit einem Gehalt an Doppelbindungen, die mit Maleinsäureanhydrid umsetzbar sind, von 60 bis 90 %, sowie ein Verfahren zu deren Herstellung durch die kationische Polymerisation von Isobuten oder Isobuten enthaltenden $C_4$-Schnitten. In den Beispielen dieser Schrift wird ein $C_4$-Schnitt, der neben 39 % Isobuten in der Summe 43 % Butene und 1 % Butadien enthält, mittels eines unmodifizierten Bortrifluorid-Katalysators zu einem niedermolekularen Isobutencopolymer mit einem Isobutenanteil von 94 % und einem Gehalt an reaktionsfähigen, vorwiegend endständigen Doppelbindungen von 88 % umgesetzt. DE-A 27 02 604 enthält keine Angaben ob oder in welchen Mengen das Butadien in die betreffenden Copolymere eingebaut wurde.

Die Schwierigkeiten bei der Herstellung von Isobuten-Dien-Copolymerisaten mit einem hohen Gehalt an endständigen Doppelbindungen, hierin auch als hochreaktive Isobuten-Dien-Copolymerisate bezeichnet, sind im wesentlichen darauf zurückzuführen, daß der Lewis- oder Brönstedt-saure Polymerisationskatalysator selbst die Isomerisierung der endständigen Doppelbindungen zu im Inneren des Makromoleküls gelegenen, internen Doppelbindungen über die intermediäre Bildung kationischer Zentren im Makromolekül katalysiert. Die im inneren des Makromoleküls gelegenen Doppelbindungen sind aber gegenüber ungesättigten Säureanhydriden, wie Maleinsäureanhydrid wenig oder gar nicht reaktiv, weshalb sich derartige Copolymere mit einem geringen Grad an Endständigkeit nicht zur Herstellung der gewünschten Kraft- und Schmierstoff-Additive eignen.

Als weitere Nebenreaktion kommt es infolge der Bildung derartiger kationischer Zentren zur Vernetzung verschiedener Makromoleküle und somit zur Bildung hochpolymerer Aggregate.

Der vorliegenden Erfindung lag somit die Aufgabe zugrunde, chlorfreie, nicht-trocknende niedermolekulare Isobuten-Dien-Copolymere eines Molekulargewichts $M_n$ von 500 bis 5000 Dalton und einem hohen Grad and Endständigkeit zur Verfügung zu stellen. Des weiteren lag der vorliegenden Erfindung die Aufgabe zugrunde, ein Verfahren zur Herstellung dieser Isobuten-Dien-Copolymere zur Verfügung zu stellen.

Dementsprechend wurde ein Verfahren zur Herstellung von chlorfreien, nicht-trocknenden Copolymerisaten aus einem oder verschiedenen $C_4$- bis $C_{10}$-Dienen mit konjugierten oder isolierten Doppelbindungen und Isobuten, die aus Isobuten und Dien-Comonomer im Molverhältnis Isobuten/Dien von 50:1 bis 1:1 zusammengesetzt sind, deren mittleres Molekulargewicht $M_n$ 500 bis 5000 Dalton beträgt und die einen Gehalt von mindestens 60 mol-% endständigen Doppelbindungen haben, durch kationische Polymerisation gefunden, das dadurch gekennzeichnet ist, daß man das Isobuten mit dem Dien in einem Molverhältnis von Isobuten/Dien 50:1 bis 0,4:1 mit Hilfe von 0,1 bis 1,0 mol-%, bezüglich der Gesamtmenge der zu polymerisierenden Olefine, Isobuten und Dien und bezogen auf die Menge des eingesetzten Bortrifluorids, eines Bortrifluorid/$C_1$- bis $C_{15}$-Alkoholkomplexes, dessen Bortrifluorid/Alkohol-Molverhältnis 0,25 bis 0,9 beträgt in An- oder Abwesenheit von Fluorwasserstoff bei Temperaturen von -60 bis 0°C polymerisiert.

Des Weiteren wurden chlorfreie, nicht-trocknende Copolymere des Isobutens mit $C_4$- bis $C_{10}$-Dienen mit isolierten oder konjugierten Doppelbindungen, mit einem Gehalt von mindestens 60 mol-% an endständigen Doppelbindungen und einem Molekulargewicht $M_n$ von 500 bis 5000 Dalton, die aus Isobuten und Dien-Comonomer im Molverhältnis Isobuten/Dien von 50:1 bis 1:1 zusammengesetzt und nach dem erfindungsgemäßen Verfahren erhältlich sind, gefunden.

Der Gehalt an endständigen Doppelbindungen der erfindungsgemäß hergestellten Isobuten-Dien-Copolymerisate wird mit Hilfe der $^{13}$C-NMR-Spektroskopie bestimmt. Endständige Doppelbindungen sind solche Doppelbindungen deren Kohlenstoffatome im $^{13}$C-NMR-Spektrum durch ihre Signale bei der chemischen Verschiebung von 114,41 und 143,56 ppm, bezogen auf den Standard Tetramethylsilan, identifizierbar sind. Der Anteil der endständigen Doppelbindungen im Copolymerisat wird über die Ermittlung der Peakflächen der Signale in Relation zum mittleren Molekulargewicht $M_n$, des Copolymerisats ermittelt.

Als mittleres Molekulargewicht oder mittlere Molmasse wird in dieser Anmeldung das Zahlenmittel $M_n$ des Molekulargewichts bezeichnet, das beispielsweise mit Hilfe der Gelpermeationschromatographie oder mittels Dampfdruckkosmometrie bestimmt werden kann.

Mit dem erfindungsgemäßen Verfahren können Polyisobutene mit einem Gehalt von mindestens 60 mol-% endständigen Doppelbindungen durch die kationische Polymerisation von Isobuten mit dem betreffenden $C_4$- bis $C_{10}$-Dien in der flüssigen Phase bei Temperaturen von 0 bis -60°C, vorzugsweise von -2 bis -30°C und besonders bevorzugt von -5 bis -20°C hergestellt werden, wobei mit Bortrifluorid in Gegenwart von Alkoholen und gegebenenfalls in Gegenwart von Fluorwasserstoff polymerisiert wird.

Im erfindungsgemäßen Verfahren wird das Bortrifluorid bezüglich des eingesetzten Alkohols in einem Molverhältnis von 0,25 bis 0,9, vorzugsweise von 0,4 bis 0,8 verwendet, d.h. der Alkohol wird im Überschuß bezüglich des Bortrifluorids zugesetzt.

In den erfindungsgemäß einzusetzenden Bortrifluorid/Alkohol-Katalysatoren liegt das Bortrifluorid nicht als diskretes Bortrifluorid-Molekül vor, sondern als Bortrifluorid-Alkohol-Komplex. Die exakte Struktur dieser Bortrifluorid-Alkohol-Komplexe in der Polymerisationsmischung ist nicht bekannt und ist vermutlich vom Molverhältnis der der Polymerisationsmischung zugesetzten Mengen an Bortrifluorid und Alkohol abhängig. Möglicherweise liegt in der Polymerisationsmischung ein Gleichgewicht zwischen dem Bortrifluorid-Alkohol-Komplex und dem überschüssigen Alkohol vor.

Da das Bortrifluorid in seinen Eigenschaften als Polymerisationskatalysator durch seine Komplexbildung mit dem Alkohol stark modifiziert, diese Änderung der Katalysatoreigenschaften auch vom Mengenverhältnis Bortrifluorid/Alkohol unmittelbar beeinflußt wird und da außerdem diese Modifizierung der Katalysatoreigenschaften sich in entscheidendem Maße auf die Qualität des damit produzierten Isobuten-Dien-Copolymerisats, insbesondere auf dessen Gehalt an endständigen Doppelbindungen, auswirkt, werden die Alkohole im folgenden, ebenso wie der Fluorwasserstoff, auch als Cokatalysatoren bezeichnet.

Beispielsweise werden bei Bortrifluorid/Alkohol-Molverhältnissen von weniger als 0,5 Copolymere erhalten, die viele Isobuteneinheiten und wenig Dieneinheiten im Makromolekül enthalten. Höhere Bortrifluorid/Alkohol-Molverhältnisse von 0,5 bis 0,9 führen zu einem verstärkten Einbau von Dienmolekülen in die Polymerkette und zu deren zunehmender Verzweigung. Bei Bortrifluorid/Alkohol-Molverhältnissen von 1 und darüber kann der Katalysator die unerwünschte Isomerisierung der endständigen Doppelbindungen zu innenständigen Doppelbindungen bewirken. Erfindungsgemäße Copolymerisate können ebenfalls bei Bortrifluorid/Alkoholmolverhältnissen zwischen 0,9 und 1,0 erhalten werden, es sollten hierbei jedoch Vorkehrungen getroffen werden, um das temporäre Zustandekommen von Bortrifluorid/Alkohol-Molverhältnissen von 1,0 und darüber zu vermeiden.

Der Zusatz von wasserfreiem Fluorwasserstoff zum erfindungsgemäßen Bortrifluorid/Alkohol-Katalysatorsystem bewirkt eine weitere Modifizierung von dessen Polymerisationsaktivität, indem verstärkt Dienmoleküle in das Copolymerisat eingebaut werden. Der Fluorwasserstoff kann bezüglich des Bors im Katalysatorsystem in einem Molverhältnis von bis zu 0,5 vorliegen, vorzugsweise wird der Fluorwasserstoff bezüglich des Bors in einem Molverhältnis von 0,01 bis 0,1 eingesetzt.

Die Art und Weise wie der Fluorwasserstoff im erfindungsgemäß angewandten Katalysatorsystem seine Wirkung entfaltet, ist bislang ungeklärt. Möglicherweise bilden sich in Abhängigkeit von der zugesetzten Fluorwasserstoffmenge ternäre Bortrifluorid/Alkohol/ Fluorwasserstoff-Komplexe bislang unbekannter chemischer Struktur.

Über die Zusammensetzung des erfindungsgemäß angewandten Katalysatorsystem kann man beispielsweise bei Verwendung konjugierter Diene, wie 1,3-Butadien oder Isopren, das Ergebnis der Copolymerisation bestimmen. Sie beeinflußt z.B. in welchem Umfang Isobuten und Dien bei gegebener Monomerkonzentration in das Copolymer eingebaut werden. So bewirken Alkohol/Bortrifluorid/Fluorwasserstoff-Katalysatorsysteme, in denen diese Komponenten beispielsweise im Molverhältnis 2/1/0,5 bis 1,5/1/0,5 enthalten sind, den statistischen Einbau der Monomeren ins Copolymerisat, d.h. die Monomerzusammensetzung entspricht der Copolymerzusammensetzung, wohingegen Alkohol/ Bortrifluorid/Fluorwasserstoff-Katalysatorsysteme, in denen diese Komponenten im Molverhältnis 1,5/1/0,05 bis 1,1/1/0,5 enthalten sind, Isobuten bevorzugt ins Copolymer einbauen, weshalb der Gehalt der Dienkomponenten in den so hergestellten Copolymeren unter dem Diengehalt der verwendeten Monomermischung liegt.

Als Alkohole können im erfindungsgemäß angewandten Katalysatorsystem primäre und sekundäre $C_1$- bis $C_{15}$-Alkohole verwendet werden, beispielsweise Methanol, Ethanol, n-Propanol, Isopropanol, n-Butanol, 2-Butanol, Isobutanol sowie primäre und sekundäre Pentanole, Hexanole, Heptanole, Octanole, Nonanole, Decanole, Undecanole, Dodecanole, Tridecanole, Tetradecanole und Pentadecanole. Die Verwendung höherer Alkohole ist ebenfalls möglich, führt aber insbesondere im Hinblick auf ihren höheren Preis in der Regel zu keinen zusätzlichen wirtschaftlichen Vorteilen. $C_1$- bis $C_8$-Alkohol-Bortrifluorid-Komplexe sind im allgemeinen in der Polymerisationsmischung nicht vollständig löslich, so daß bei deren Verwendung als Katalysator die Polymerisation unter heterogener Katalyse stattfindet, wohingegen bei Anwendung von $C_9$- bis $C_{15}$-Alkohol-Bortrifluorid-Komplexen, diese Komplexe aufgrund der höheren Lipophilie der eingesetzten Alkohole in der Polymerisationsmischung homogen gelöst sind und die Polymerisation homogen katalysieren. Bevorzugt werden im erfindungsgemäßen Verfahren primäre und sekundäre $C_1$- bis $C_5$-Alkohole als Cokatalysatoren verwendet.

Die erfindungsgemäß einsetzbaren Katalysatoren können in der Polymerisationsmischung durch Eindosieren der Katalysatorkomponenten Alkohol, Bortrifluorid und gegebenenfalls Fluorwasserstoff in situ erzeugt werden, es können aber auch vorteilhaft in einer separaten Apparatur erzeugte, vorgeformte Bortrifluorid/Alkohol- oder Bortrifluorid/Alkohol/Fluorwasserstoff-Komplexe als Katalysator der Polymerisationsmischung zugeführt werden. Werden die Katalysatorkomplexe in situ in der Polymerisationsmischung erzeugt, führt man den Alkohol vorteilhaft gleichzeitig mit dem Bortrifluorid und gegebenenfalls dem Fluorwasserstoff der Polymerisationsmischung zu, wobei primäre und sekundäre $C_1$- bis $C_5$-Alkohole zur In-situ-Erzeugung des Katalysatorkomplexes bevorzugt verwendet werden.

Als Rohstoff zur Herstellung der erfindungsgemäß anwendbaren Bortrifluorid/Katalysatorkomplexe wird zweckmäßigerweise gasförmiges Bortrifluorid benutzt, wobei technisches, noch geringe Mengen Schwefeldioxid enthaltendes (Reinheit: 96,5 Gew.-%), vorzugsweise aber reines Bortrifluorid (Reinheit: 99,5 Gew.-%) verwendet werden kann. Bortrifluorid und Fluorwasserstoff können nach den Verfahren von Büchner et al: Industrial Inorganic Chemistry, Seiten 145 und 137, VCH Verlagsgesellschaft, Weinheim 1989 hergestellt werden. Die verwendbaren Alkohole sind Grundchemikalien oder können beispielsweise durch die Hydrierung der entsprechenden Fettsäuren erhalten werden.

Als Diene können im erfindungsgemäßen Verfahren offenkettige $C_4$- bis $C_{10}$-Diene mit isolierten oder konjugierten Doppelbindungen verwendet werden, beispielsweise 1,3-Butadien, Isopren, 1,4-Pentadien, 1,6-Hexadien, 2,5-Dimethylhexadien-1,5 usw. Besonders bevorzugt ist die Verwendung von 1,3-Butadien und Isopren als Dienkomponente bei der Polymerisation.

Im erfindungsgemäßen Verfahren können im Zulauf zum Reaktor Isobuten/Dien-Molverhältnisse von 50:1 bis 0,4:1, vorzugsweise von 20:1 bis 1,25:1, insbesondere 20:1 bis 1:1 angewandt werden. Wird als Dien 1,3-Butadien verwendet, so beträgt der 1,3-Butadiengehalt im Zulauf der zu polymerisierenden Kohlenwasserstoffströme im allgemeinen mindestens 1 Gew.-% und maximal 55 Gew.-%. Das dem Reaktor zugeführte Isobuten/Dien-Gemisch kann vollständig oder teilweise zu den erfindungsgemäßen Copolymeren umgesetzt werden.

Bei einem Teilumsatz des Monomergemisches, beispielsweise einem Teilumsatz von 50 %, können die Monomere als Lösungsmittel dienen, wodurch gewünschtenfalls auf den Zusatz eines weiteren Lösungsmittels verzichtet werden kann. Der Zusatz von unter den Reaktionsbedingungen inerten Lösungsmitteln, insbesondere von gesättigten Kohlenwasserstoffen wie Butan, Pentan, Hexan, Heptan oder Octan oder von halogenierten Kohlenwasserstoffen, wie Dichlormethan, Chloroform, Dichlorethan, Trichlorethan, Tetrachlorethan, Perchlorethan, oder fluorierten Kohlenwasserstoffen zur Polymerisationsmischung ist möglich. Besonders bevorzugte Lösungsmittel sind geradkettige Kohlenwasserstoffe. Vorteilhaft beträgt der Isobutengehalt der Polymerisationsmischung 1 bis 50 Gew.-%, insbesondere 1 bis 25 Gew.-%.

Als Einsatzstoffe der Isobuten-Dien-Copolymerisate können vorteilhaft Isobuten- und Dien-haltige Kohlenwasserstoffströme verwendet werden, wie sie beispielsweise als sogenannte $C_4$- oder $C_5$-Schnitte aus Steamcrackern anfallen. 1,3-Butadien kann aus diesen $C_4$-Schnitten durch Extraktion, beispielsweise mit N-Methylpyrrolidon als Lösungsmittel, isoliert werden. Auf die gleiche Weise kann Isopren aus Cs-Crackfraktionen gewonnen werden. Sowohl 1,3-Butadien als auch Isopren sind Grundchemikalien.

Die Bortrifluorid-Komplex-Katalysatoren werden bezüglich der Gesamtmenge der zu polymerisierenden Olefine, Isobuten und Dien, in einer Menge von 0,1 bis 1,0 mol-%, vorteilhaft von 0,2 bis 0,5 mol-%, bezogen auf die Menge des eingesetzten Bortrifluorids, der Polymerisationsmischung zugeführt.

Die Polymerisation des Isobutens mit dem Dien kann diskontinuierlich durchgeführt werden, bevorzugt wird aber die kontinuierliche Arbeitsweise. Dazu kann in an sich herkömmlichen Reaktoren, wie Rohrreaktoren, Rohrbündelreaktoren oder Rührkesseln gearbeitet werden, vorzugsweise wird das erfindungsgemäße Verfahren in einem Schlaufenreaktor, also einem Rohr- oder Rohrbündelreaktor mit stetigem Umlauf des Reaktionsgutes, durchgeführt, wobei in der Regel das Verhältnis von Umlauf zu Zulauf zwischen 10 und 1000, vorzugsweise zwischen 50 und 250 v/v variieren kann. Es versteht sich von selbst, daß die Zulaufmenge nach Äquilibrierung der Polymerisationsreaktion gleich der Menge des Reaktionsaustrags ist.

Die Verweilzeit der Isobuten-Dien-Polymerisationsmischung im Reaktor kann 10 Sekunden bis 5 Stunden betragen, vorzugsweise wird eine Verweilzeit von 0,1 bis 1 h und besonders bevorzugt von 0,2 bis 0,5 h gewählt. Die Bruttoreaktionsgeschwindigkeit ist von der Menge und vor der Art des eingesetzten Bortrifluorid-Komplex-Katalysators abhängig und wird zweckmäßigerweise für den jeweils eingesetzten Katalysator und die verwendete Isobuten-Dien-Mischung in einem Vorversuch ermittelt.

Die Polymerisation wird zweckmäßigerweise bei Temperaturen unterhalb 0°C durchgeführt. Obwohl das Isobuten mit dem Dien noch bei wesentlich tieferen Temperaturen zu den gewünschten Isobuten-Dien-Copolymerisaten polymerisiert werden kann, wird vorzugsweise bei Temperaturen von 0 bis -60°C insbesondere zwischen -2 und -30°C und besonders bevorzugt zwischen -5 und -20°C gearbeitet. Im allgemeinen wird die Polymerisation unter Atmosphärendruck ausgeführt, die Anwendung erhöhten Druckes, insbesondere das Arbeiten unter dem Eigendruck des Polymerisationssystems, ist ebenfalls möglich. Vorteilhaft wird die Polymerisation unter isothermen Bedingungen und unter Einstellung einer konstanten, stationären Konzentration der einzelnen Monomere im Reaktionsmedium betrieben.

Da die Polymerisationsreaktion exotherm verläuft, wird die Polymerisationswärme in der Regel mit Hilfe einer Kühlvorrichtung, die beispielsweise mit flüssigem Ammoniak als Kühlmittel betrieben werden kann, abgeführt.

Zur Aufarbeitung wird der Reaktionsaustrag zweckmäßigerweise in ein Medium geleitet, das den Polymerisationskatalysator desaktiviert und auf diese Weise die Polymerisationsreaktion abbricht. Dazu können beispielsweise Wasser, Alkohole, Acetonitril, Ammoniak, Amine oder wäßrige Lösungen von Basen, insbesondere von Mineralbasen, wie Alkalimetall- und Erdalkalimetall-Hydroxidlösungen oder von Lösungen der Carbonate dieser Metalle als auch wäßrige Ammoniaklösungen verwendet werden.

Im weiteren Gang der Aufarbeitung wird das Copolymerisat, zweckmäßigerweise nach Extraktion von Restmengen des Katalysators, destillativ in nicht umgesetztes Isobuten und Dien, gegebenenfalls zugesetztes Lösungsmittel, Oligomere und Copolymerisat getrennt. Die Monomere, die Oligomere und gegebenenfalls das Lösungsmittel können in die Polymerisationsapparatur zurückgeführt und weiter umgesetzt werden. Das gewünschte Isobuten-Dien-Copolymerisat kann als Sumpfprodukt aus der Destillationskolonne abgezogen werden.

Das erfindungsgemäße Verfahren liefert chlorfreie, nicht-trocknende Isobuten-Dien-Copolymere eines mittleren Molekulargewicht von 500 bis 5000 Dalton mit einem Gehalt an endständigen Doppelbindungen von mehr als 60 mol-%. Die so erhaltenen Copolymerisate sind aus den Comonomeren Isobuten und Dien im Molverhältnis von 50:1 bis 1:1, vorzugsweise von 20:1 bis 1,25:1 und besonders bevorzugt von 10:1 bis 2:1 zusammengesetzt. Der Gehalt der Copolymerisate an innenständigen Doppelbindungen, bedingt durch den Einbau konjugierter Diene über eine 1,4-Addition, kann 50 bis 1000 mol-% betragen. Die Dispersität der Copolymerisate beträgt in der Regel 1,4 bis 2,5, d.h. die erhaltenen Copolymerisate sind sehr einheitlich, was wiederum zu anwendungstechnischen Vorteilen führt.

Beispiele

Die mittleren Molmassen ($M_n$) der gemäß den Beispielen hergestellten Polymeren wurden mittels Gelpermeationschromatographie bestimmt, wobei standardisierte Polyisobutene zur Eichung verwendet wurden. Aus den erhaltenen Chromatogrammen wurde das Zahlenmittel $M_n$ nach der Gleichung I

$$M_n = \frac{\Sigma c_i}{\Sigma \dfrac{c_i}{M_i}} \qquad\qquad I$$

berechnet, in der $c_i$ für die Konzentration der einzelnen Polymerspecies i im erhaltenen Polymergemisch steht und in der $M_i$ das Molekulargewicht der einzelnen Polymerspecies i bedeutet. Die Molekulargewichtsverteilung, im folgenden als Dispersität D bezeichnet, wurde aus dem Verhältnis von Gewichtsmittel des Molekulargewichts ($M_w$) und Zahlenmittel des Molekulargewichts ($M_n$) nach der Gleichung II

$$\frac{M_w}{M_n} = D \qquad\qquad\qquad II$$

errechnet. Das Gewichtsmittel $M_w$ wurde aus den erhaltenen Chromatogrammen mit Hilfe der Formel III

$$M_w = \frac{\Sigma c_i M_i}{\Sigma c_i} \qquad\qquad\qquad III$$

bestimmt. Der Gehalt an endständigen Doppelbindungen wurde mit Hilfe der $^{13}$C-NMR-Spektroskopie bestimmt, wobei als Lösungsmittel deuteriertes Chloroform und als Standard Tetramethylsilan verwendet wurde. Der Gesamtgehalt an Doppelbindungen wurde über die Bestimmung der Bromzahl nach ASTM D 1159-66 bestimmt. Die Säurezahl, ermittelt durch Titration des Reaktionsaustrags mit alkoholischer Kalilauge, ist ein Maß für den Gehalt der Reaktionsmischung an Bortrifluorid und/oder Fluorwasserstoff.

Beispiel 1

In einer Polymerisationsapparatur, bestehend aus einer Umwälzpumpe einer Förderkapazität von 30 l/h und einer Schlaufe aus einem 40 cm langen Rohr eines Innendurchmessers von 10 mm, deren Reaktionsvolumen 100 ml betrug, wurden auf der Saugseite der Pumpe stündlich 200 g Isobuten, 50 g 1,3-Butadien, 250 g n-Hexan, 22 mmol Bortrifluorid, 31 mmol Ethanol und 1 mmol Fluorwasserstoff der Polymerisationsapparatur zugeführt. Alle Lösungsmittel und Reagenzien waren vorher über Molekularsieb 3X getrocknet worden. Der Fluorwasserstoff wurde im eingesetzten Ethanol gelöst der Reaktionsapparatur zugeführt. Während der Dauer der Polymerisation wurde die Polymerisationsapparatur auf -22°C thermostatisiert. Bis zum Anspringen der Polymerisation wurde die Zuführgeschwindigkeit für Bortrifluorid um 15 mmol/h erhöht. Nach Einstellung eines stationären Zustandes in der Polymerisationsmischung betrug das Bortrifluorid/Ethanol-Molverhältnis 0,7:1 Über eine Austragsleitung, die vor dem Zuleitungsrohr für die Reagenzien angeordnet war, wurden pro Stunde 503 g der Polymerisationsmischung aus der Polymerisationsapparatur ausgetragen und die Polymerisationsreaktion im Austrag durch Zusatz von 100 mmol Acetonitril/h Polymerisationsmischung abgebrochen. Unter den angegebenen Bedingungen stellte sich im stationären Zustand eine Temperatur der Polymerisationsmischung von -10°C ein.

Nach 4 Stunden Betrieb unter stationären Bedingungen wurde die Säurezahl des Reaktoraustrags, zwecks Bestimmung des Katalysatorgehalts, titrimetrisch bestimmt und der Isobutengehalt des Polymerisationsaustrages gaschromatographisch ermittelt. Danach wurde während 1 h der so erhaltene Polymerisationsaustrag gesammelt (1-Stunden-Probe) und bei 40°C mit 300 ml Wasser gerührt. Das Waschwasser wurde abgetrennt und die 1-Stunden-Probe nochmals mit 300 ml Wasser gewaschen. Bei der nachfolgenden destillativen Reinigung wurden vom erhaltenen Isobuten-1,3-Butadien-Copolymerisat bei einer Temperatur von 220°C nicht umgesetztes Isobuten, 1,3-Butadien, n-Hexan und Oligomere abgetrennt, Restmengen dieser Bestandteile bei einem Druck von 2 mbar abdestilliert und das Copolymerisat aus dem Sumpf der Destillation abgezogen. Das so gewonnene Copolymerisat wurde mittels 13C-Kernresonanz(NMR)spektroskopie, über die Bestimmung seiner Bromzahl und mit Hilfe der Gelpermeationschromatographie unter Zuhilfenahme eines Polyisobutylen-Standards charakterisiert.

Bei einem Isobutenumsatz über 98 %, einem 1,3-Butadienumsatz von 96 % und einer Säurezahl von 4,0 mg KOH/g Austrag wurde ein Isobuten-1,3-Butadien-Copolymer eines mittleren Molekulargewichts $M_n$ von 967, einer Dispersität von 1,49 und eines Gehalts an endständigen Doppelbindungen von 33 %, bezogen auf die Gesamtmenge von 2,8 Doppelbindungen/Molekül, erhalten, d.h. 91 % aller Copolymerisat-Moleküle trugen eine endständige Doppelbindung. Die Bromzahl des Copolymerisats betrug 44,8, d.h. jedes Polymermolekül hatte im Durchschnitt 2,8 Doppelbindungen.

Beispiel 2

Beispiel 2 wurde nach der Verfahrensweise von Beispiel 1 in der Apparatur von Beispiel 1 durchgeführt. Der Zulauf pro Stunde bestand aus 200 g n-Hexan, 200 g Isobuten, 100 g 1,3-Butadien, 23 mmol Bortrifluorid und 29 mmol Isopropanol. Fluorwasserstoff wurde in diesem Versuch nicht verwendet. Die Temperatur der Polymerisationsmischung wurde auf -6°C eingestellt.

Der Polymerisationsaustrag hatte eine Säurezahl von 3,5 mg KOH/g, einen Isobutengehalt von 3,8 Gew.-% und einen 1,3-Butadiengehalt von 6,7 Gew.-%. Bei der Aufarbeitung wurde ein Copolymer eines Molekulargewichts $M_n$ von 930, einer Dispersität von 1,54, einer Bromzahl von 61,1 und einem Gehalt an endständigen Doppelbindungen, bezogen auf die Gesamtzahl der Doppelbindungen pro Molekül, von 35 % erhalten. Das erhaltene Copolymer enthält somit insgesamt 3,6 Doppelbindungen pro Molekül, von denen 1,2 Doppelbindungen endständig sind.

Beispiele 3 bis 7

Die Beispiele 2 bis 5 wurden analog der Vorgehensweise von Beispiel 1 in derselben Polymerisationsapparatur durchgeführt, wobei die in Tabelle 1 angegebenen Reaktionsbedingungen angewandt und die dort genannten Einsatzstoffe verwendet wurden. Der Fluorwasserstoff wurde zusammen mit dem Alkohol als ca. 3, 10 oder 20 mol-%ige Lösung der Polymerisationsapparatur zugeführt. Die Ergebnisse der Beispiele 2 bis 5 sind in Tabelle 1 aufgelistet.

Tabelle 1

| Beispiel | | 3 | 4 | 5 | 6 | 7 |
|---|---|---|---|---|---|---|
| Isobuten | [g/h] | 200 | 150 | 200 | 200 | 200 |
| n-Hexan | [g/h] | 250 | 200 | 150 | 250 | 250 |
| Dien | | Butadien | Butadien | Butadien | Isopren | Hexadien[1] |
| Dienmenge | [g/h] | 50 | 150 | 200 | 50 | 25 |
| BF3 | [mmol/h] | 20 | 21 | 18 | 17 | 19 |
| n-Propanol | [mmol/h] | 32 | 25 | 25 | 33 | 35 |
| HF | [mmol/h] | 1,0 | 2,5 | 5,0 | 1,0 | 1,2 |
| Reaktortemperatur | [°C] | -8 | -6 | -2 | -8 | -9 |
| Säurezahl | | 4,0 | 3,6 | 3,6 | 3,8 | 3,7 |
| Isobutengehalt | [Gew.-%] | 1,6 | 2,8 | 3,1 | 1,4 | 4,2 |
| Butadiengehalt | [Gew.-%] | 1,1 | 5,6 | 4,9 | 4,3 | 4,5 |
| Bromzahl | | 62,0 | 73,8 | 73,3 | 50,4 | 31,3 |
| endst. Doppelb.[2] | [%] | 18 | 12 | 22 | 24 | 43 |
| endst. Doppelb./Mol | [%] | 68 | 74 | 157 | 82 | 86 |
| Doppelb./Molekül | | 3,9 | 6,4 | 6,8 | 3,4 | 2,0 |
| $M_N{}^{GPC}$ | | 1017 | 1381 | 1474 | 1073 | 1044 |
| Verteilung $D^{GPC}$ | | 1,47 | 1,83 | 1,84 | 1,51 | 1,48 |

[1] 1,2,5-Dimethylhexadien-1,5

[2] bezogen auf die Gesamtzahl der Doppelbindungen

$^{GPC}$ Gelpermeationschromatographie

Beispiel 8

Beispiel 8 wurde analog Beispiel 1 ausgeführt. Es wurde als Einsatzstoff ein C4-Schnitt aus einem Steamcracker verwendet, der die folgende Zusammensetzung hatte:

| | |
|---|---|
| 1,3-Butadien | 52 Gew.-% |
| Isobutan | 1,9 Gew.-% |
| n-Butan | 4,4 Gew.-% |
| Buten-1 | 13,9 Gew.-% |
| trans-Buten-2 | 3,7 Gew.-% |
| cis-Buten-2 | 2,2-Gew.-% |
| Isobuten | 21,8 Gew.-% |

Die Reaktionsbedingungen und Resultate sind in Tabelle 2 aufgeführt.

Tabelle 2

| n-Hexan | [g/h] | 200 |
|---|---|---|
| $C_4$-Schnitt | [g/h] | 500 |

Tabelle 2   (fortgesetzt)

| | | |
|---|---|---|
| BF$_3$ | [mmol/h] | 22 |
| n-Propanol | [mmol/h] | 23 |
| HF | [mmol/h] | 0,7 |
| Reaktortemperatur | [°C] | -10 |
| Säurezahl | | 3,6 |
| Isobutengehalt im Austrag | [Gew.-%] | 2,2 |
| Butadiengehalt im Austrag | [Gew.-%] | 35 |
| Bromzahl | | 79,6 |
| endst. Doppelb.[1] | [%] | 14 |
| endst. Doppelb./Mol | [%] | 70 |
| Doppelb./Molekül | | 5,0 |
| M$_N$$^{GPC}$ | | 1004 |
| Verteilung D$^{GPC}$ | | 1,55 |

[1] bezogen auf die Gesamtzahl der Doppelbindungen

Beispiel 9

Beispiel 9 wurde analog zu Beispiel 1 durchgeführt. Als Dienquelle wurde ein C$_5$-Schnitt aus einem Steamcracker verwendet, der die folgende Zusammensetzung hatte:

| | |
|---|---|
| Pentane | 30,4 Gew.-% |
| n-Pentene | 6,1 Gew.-% |
| Methylbutene | 7,9 Gew.-% |
| Pentadiene | 13,4 Gew.-% |
| Isopren | 18,7 Gew.-% |
| Cyclopentane/-pentene | 4,5 Gew.-% |
| Cyclopentadien | 18,4 Gew.-% |
| sonstige | 0,6 Gew.-% |

Die Reaktionsbedingungen und Resultate sind in Tabelle 3 zusammengefaßt:

Tabelle 3

| | | |
|---|---|---|
| n-Hexan | [g/h] | 200 |
| C$_5$-Schnitt | [g/h] | 150 |
| Isobuten | [g/h] | 150 |
| BF$_3$ | [mmol/h] | 29 |
| Isopropanol | [mmol/h] | 44 |
| Reaktortemperatur | [°C] | -10 |
| Säurezahl | | 4,0 |
| Isobutengehalt | [Gew.-%] | < 1 |
| Bromzahl | | 24,4 |
| endst. Doppelb,[1] | [%] | 48 |
| endst. Doppelb./Mol | [%] | 77 |
| Doppelb./Molekül | | 1,6 |

Tabelle 3   (fortgesetzt)

| $M_N{}^{GPC}$ | | 1045 |
|---|---|---|
| Verteilung $D^{GPC}$ | | 1,72 |

## Patentansprüche

1. Verfahren zur Herstellung von chlorfreien, nicht-trocknenden Copolymerisaten aus einem oder verschiedenen $C_4$- bis $C_{10}$-Dienen mit konjugierten oder isolierten Doppelbindungen und Isobuten, die aus Isobuten und Dien-Comonomer im Molverhältnis Isobuten/Dien von 50:1 bis 1:1 zusammengesetzt sind, deren mittleres Molekulargewicht 500 bis 5000 Dalton beträgt und die einen Gehalt von mindestens 60 mol-% endständigen Doppelbindungen haben, durch kationische Polymerisation, dadurch gekennzeichnet, daß man das Isobuten mit dem Dien in einem Molverhältnis von Isobuten/Dien von 50:1 bis 0,4:1 mit Hilfe von 0,1 bis 1,0 mol-%, bezüglich der Gesamtmenge der zu polymerisierenden Olefine, Isobuten und Dien und bezogen auf die Menge des eingesetzten Bortrifluorids, eines Bortrifluorid/$C_1$- bis $C_{15}$-Alkoholkomplexes, dessen Bortrifluorid/Alkohol-Molverhältnis 0,25 bis 0,9 beträgt, in An- oder Abwesenheit von Fluorwasserstoff bei Temperaturen von -60 bis 0°C polymerisiert.

2. Verfahren nach Anspruch 1, dadurch gekennzeichnet, daß man der Polymerisationsmischung Fluorwasserstoff in einem Molverhältnis bezüglich des in der Polymerisationsmischung enthaltenen Bors von 0,001 bis 0,5 zusetzt.

3. Verfahren nach Anspruch 1, dadurch gekennzeichnet, daß man in der Polymerisationsmischung ein Isobuten/Dien-Molverhältnis von 20:1 bis 1:1 einstellt.

4. Verfahren nach Anspruch 1, dadurch gekennzeichnet, daß man als Dien 1,3-Butadien und/oder Isopren verwendet.

5. Verfahren nach Anspruch 1, dadurch gekennzeichnet, daß man Isobuten und Dien enthaltende Kohlenwasserstoffströme in die Polymerisation einsetzt.

6. Chlorfreie, nicht-trocknende Copolymere aus Isobuten und $C_4$- bis $C_{10}$-Dienen mit isolierten oder konjugierte Doppelbindungen mit einem Gehalt von mindestens 60 mol-% endständigen Doppelbindungen und einem Molekulargewicht $M_n$, von 500 bis 5000 Dalton, die aus Isobuten und Dien-Comonomer im Molverhältnis Isobuten/Dien von 50:1 bis 1:1 zusammengesetzt sind, erhältlich nach dem Verfahren gemäß Anspruch 1.

7. Copolymere nach Anspruch 6, die als Dien-Comonomer 1,3-Butadien und/oder Isopren enthalten.

## Claims

1. A process for the preparation of a chlorine-free, non-drying copolymer from one $C_4$-$C_{10}$-diene or different $C_4$-$C_{10}$-dienes having conjugated or isolated double bonds and isobutene, which is composed of isobutene and a diene comonomer in a molar isobutene/diene ratio of from 50 : 1 to 1 : 1, whose average molecular weight is from 500 to 5,000 Dalton and which contains at least 60 mol % of terminal double bonds, by cationic polymerization, wherein the isobutene is polymerized with the diene in a molar isobutene/diene ratio of from 50 : 1 to 0.4 : 1 with the aid of from 0.1 to 1.0 mol %, relative to the total amount of the olefins to be polymerized, isobutene and diene and based on the amount of the boron trifluoride used, of a boron trifluoride/$C_1$-$C_{15}$-alcohol complex whose molar boron trifluoride/alcohol ratio is from 0.25 to 0.9, in the presence or absence of hydrogen fluoride at from -60 to 0°C.

2. A process as claimed in claim 1, wherein hydrogen fluoride is added in a molar ratio of from 0.001 to 0.5, based on the boron contained in the polymerization mixture, to the polymerization mixture.

3. A process as claimed in claim 1, wherein a molar isobutene/diene ratio of from 20 : 1 to 1 : 1 is established in the polymerization mixture.

4. A process as claimed in claim 1, wherein 1,3-butadiene or isoprene is used as the diene.

5. A process as claimed in claim 1, wherein isobutene- and diene-containing hydrocarbon streams are used in the polymerization.

6.  A chlorine-free, non-drying copolymer of isobutene and a $C_4$-$C_{10}$-diene having isolated or conjugated double bonds and containing at least 60 mol % of terminal double bonds and having a molecular weight $M_n$ of from 500 to 5,000 Dalton, which is composed of isobutene and a diene comonomer in a molar isobutene/diene ratio of from 50 : 1 to 1 : 1, obtainable by the process as claimed in claim 1.

7.  A copolymer as claimed in claim 6, which contains 1,3-butadiene or isoprene as the diene comonomer.

**Revendications**

1.  Procédé de préparation de copolymères exempts de chlore et non asséchants, à partir d'un diène ou de plusieurs diènes différents en $C_4$-$C_{10}$ ayant des doubles liaisons conjuguées ou isolées et d'isobutène, qui sont composés d'isobutène et des diènes comonomères dans un rapport en moles isobutène/diène de 50 : 1 à 1 : 1, dont le poids moléculaire moyen est de 500-5000 Dalton et qui ont une teneur en doubles liaisons terminales d'au moins 60% en moles, par polymérisation cationique, caractérisé en ce que l'on polymérise l'isobutène avec les diènes dans un rapport en moles isobutène/diène de 50 : 1 à 0,4: 1 à l'aide de 0,1-1,0% en moles, par rapport à la quantité totale d'oléfines, d'isobutène et de diènes à polymériser et par rapport à la quantité de trifluorure de bore utilisée, d'un complexe trifluorure de bore/alcool en $C_1$-$C_{15}$, dont le rapport en moles trifluorure de bore/alcool s'élève à 0,25-0,9, en présence ou en l'absence de fluorure d'hydrogène, à des températures de -60 à 0°C.

2.  Procédé selon la revendication 1, caractérisé en ce que l'on ajoute le fluorure d'hydrogène au mélange de polymérisation dans un rapport en moles de 0,001 à 0,5, par rapport au bore contenu dans le mélange de polymérisation.

3.  Procédé selon la revendication 1, caractérisé en ce que l'on règle un rapport en moles isobutène/diène de 20 : 1 à 1 :1, dans le mélange de polymérisation.

4.  Procédé selon la revendication 1, caractérisé en ce que l'on utilise du 1,3-butadiène et/ou de l'isoprène en tant que diène.

5.  Procédé selon la revendication 1, caractérisé en ce que l'on utilise dans la polymérisation des courants d'hydrocarbures contenant de l'isobutène et des diènes.

6.  Copolymères exempts de chlore et non asséchants formés à partir d'un diène ou de plusieurs diènes différents en C4-C10 ayant des doubles liaisons conjuguées ou isolées et une teneur en doubles liaisons terminales d'au moins 60% en moles et dont le poids moléculaire $M_n$ est de 500-5000 Dalton, composés d'isobutène et de diènes comonomères dans un rapport en moles isobutène/diène de 50 : 1 à 1 : 1, pouvant être obtenus par le procédé selon la revendication 1.

7.  Copolymère selon la revendication 6, contenant du 1,3-butadiène et/ou de l'isoprène en tant que diène comono-mère.